(19) Europäisches Patentamt
European Patent Office
Office européen des brevets

(11) **EP 1 875 303 B1**

(12) **FASCICULE DE BREVET EUROPEEN**

(45) Date de publication et mention
de la délivrance du brevet:
**02.12.2020 Bulletin 2020/49**

(21) Numéro de dépôt: **06755418.8**

(22) Date de dépôt: **18.04.2006**

(51) Int Cl.:
***G02C 7/06*** (2006.01)

(86) Numéro de dépôt international:
**PCT/FR2006/000850**

(87) Numéro de publication internationale:
**WO 2006/111652 (26.10.2006 Gazette 2006/43)**

(54) **VERRE OPHTALMIQUE COMPRENANT UNE COUCHE D'INDICE DE REFRACTION VARIABLE**

OPHTHALMISCHE LINSE MIT EINER SCHICHT MIT VERÄNDERLICHEM BRECHUNGSINDEX

OPHTHALMIC LENS COMPRISING A LAYER HAVING A VARIABLE REFRACTIVE INDEX

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.04.2005 FR 0503917**

(43) Date de publication de la demande:
**09.01.2008 Bulletin 2008/02**

(73) Titulaire: **Essilor International
94220 Charenton-le-Pont (FR)**

(72) Inventeurs:
• **BONNIN, Thierry
F-94220 Charenton le Pont (FR)**
• **PETIGNAUD, Cécile
F-94220 Charenton le Pont (FR)**

(74) Mandataire: **Plasseraud IP
66, rue de la Chaussée d'Antin
75440 Paris Cedex 09 (FR)**

(56) Documents cités:
WO-A-03/035377    WO-A-2004/034095
US-A- 5 148 205    US-A1- 2003 003 295

• **Anonymous: "Gradient Index Lens", , 1 January 2001 (2001-01-01), XP055453151, Retrieved from the Internet: URL:https://spie.org/publications/tt48_55_ gradient_index_lens [retrieved on 2018-02-21]**
• **DAVID JOEL FISCHER: "Gradient-Index Ophthalmic Lens Design and Polymer Material Studies", THESIS SUBMITTED IN PARTIAL FULLFILLMENT IF THE REQUIREMENTS FOR THE DEGREE DOCTOR OF PHILOS, UNIVERSITY OF ROCHSTER- THE INSTITUTE OF OPTICS. THE COLLEGE SCHOOL OF ENGINEERING ANS APPLIED SCIENCES, USA, 1 January 2002 (2002-01-01), pages 1-301, XP008134195, ISBN: 978-0-493-76918-9**

## Description

La présente invention concerne un verre ophtalmique comprenant au moins une couche d'indice de réfraction variable, ainsi que des lunettes de prescription comprenant un tel verre.

De façon usuelle, un verre ophtalmique procure une correction visuelle conforme à une prescription établie pour le porteur de ce verre. La prescription indique notamment une valeur de puissance optique, une valeur d'astigmatisme et un axe d'astigmatisme, qui sont déterminés de façon à corriger la vision de loin du porteur. Ces valeurs sont généralement obtenues en sélectionnant un verre d'indice de réfraction approprié et en conférant des formes adaptées aux faces antérieure et postérieure du verre.

Pour un verre progressif, l'une au moins des deux faces du verre présente une forme particulière, avec des variations de sphère moyenne entre la partie haute et la partie basse du verre, dont résultent des variations de puissance optique perçues par le porteur lorsqu'il modifie sa direction de regard.

De façon connue, en chaque point d'une face du verre, la sphère moyenne est reliée à la courbure moyenne de cette face, et le cylindre est relié à un écart entre les deux courbures d'un tore tangent à la face du verre. On appelle ligne méridienne la courbe sur la face du verre suivant laquelle la puissance optique varie, et qui est constituée par l'ensemble privilégié de points du verre qui détermine la trajectoire devant être normalement suivie par un œil pour passer de la position de vision de loin à la position de vision de près. La ligne méridienne est définie lors de la conception d'un verre progressif. On appelle design optique un type de variations de la puissance optique et de l'astigmatisme du verre dans le champ de vision en-dehors de la ligne méridienne. On appelle design surfacique un type de variations de la sphère et du cylindre de la face progressive du verre en-dehors de la ligne méridienne. En particulier, l'addition optique, qui est la différence de puissance optique entre deux points du verre dédiés respectivement à la vision de près et à la vision de loin, doit aussi correspondre à la valeur prescrite à un porteur presbyte. De la même manière, l'addition surfacique est la différence de sphère moyenne entre le point dédié à la vision de près et le point dédié à la vision de loin.

La fonction de progression de la sphère moyenne d'une face de verre engendre des valeurs de cylindre non nulles dans des zones du verre situées en-dehors de la ligne méridienne, dites zones latérales de la face du verre.

Couramment, un verre progressif est fabriqué en deux étapes successives. La première étape consiste à fabriquer un verre semi-fini dont la face antérieure présente des variations de sphère moyenne et de cylindre définies initialement pour correspondre à un design déterminé. Elle est exécutée en usine, par exemple par moulage ou injection. Les verres semi-finis sont répartis en plusieurs modèles, qui peuvent différer notamment par la sphère moyenne au point de vision de loin du verre, par la répartition des sphère moyenne et cylindre de la face antérieure sur la ligne méridienne ou en dehors de celle-ci, ou par l'addition. La distance entre les points de vision de loin et de près, les largeurs respectives des zones du verre correspondant à la vision de loin et à la vision de près, l'indice de réfraction du matériau transparent qui constitue le verre semi-fini, etc, peuvent aussi différer d'un modèle à l'autre. Chaque combinaison de ces caractéristiques correspond à un modèle différent de verre semi-fini.

La seconde étape est réalisée dans des laboratoires situés entre les usines et des centres de vente au détail, au sein de la chaîne de distribution des verres ophtalmiques. Elle consiste à usiner en reprise la face postérieure de chaque verre, sous forme d'une surface sphérique, torique ou plus complexe, pour que le verre corresponde à la prescription d'un porteur.

Or aujourd'hui, une tendance apparaît, selon laquelle les verres ophtalmiques sont personnalisés en fonction de chaque porteur. Cette personnalisation peut être de différents types. Elle peut consister, par exemple, en un ajustement fin de la puissance optique et/ou de l'astigmatisme de chaque verre, en deçà de l'écart minimal de puissance optique et/ou d'astigmatisme existant entre deux verres semi-finis.

Dans le cas d'un verre progressif, le design du verre peut aussi être personnalisé, par exemple en fonction de caractéristiques supplémentaires du porteur autres que les caractéristiques usuelles de prescription. De telles caractéristiques supplémentaires peuvent concerner, notamment, les positions de la tête du porteur et celles de ses yeux respectivement pour une situation de vision de loin et une situation de vision de près. Le verre progressif peut alors être personnalisé de sorte que la zone de vision de loin et la zone de vision de près sont situées à des endroits du verre adaptés par rapport aux positions de tête et d'yeux du porteur, et présentent des largeurs adaptées par rapport aux mouvements horizontaux de ses yeux.

Dans l'organisation de la fabrication des verres ophtalmiques décrite plus haut, une telle personnalisation des verres nécessite de multiplier les modèles de verres semi-finis. Les séries de verres semi-finis de chaque modèle qui sont fabriquées en usine sont alors moins grandes, pour un nombre supérieur de séries, et le prix de revient unitaire de chaque verre est plus élevé. En outre, une gestion complexe des stocks en résulte au niveau des laboratoires, puisque ceux-ci doivent disposer de réserves pour un grand nombre de modèles de verres semi-finis.

Pour éviter une telle multiplication des modèles de verres semi-finis, une nouvelle organisation de la chaîne de fabrication des verres a été proposée pour les verres progressifs. Selon cette nouvelle organisation, le design du verre progressif est apporté par la face postérieure du verre. Les verres semi-finis possèdent alors une face antérieure sphérique, ou moins complexe que dans le cas d'un design entièrement progressif, et la face postérieure est usinée en reprise conformément à la prescription et/ou au design qui est adapté aux caractéristiques individuelles déterminées pour chaque porteur. Une telle organisation est particulièrement flexible, étant donné qu'aucune caractéristique individuelle du porteur n'intervient plus dans la sélection du modèle de verre semi-fini. En particulier, un nombre réduit de modèles de verres semi-finis est suffisant pour obtenir toutes les configurations de verres finis.

Mais, dans ce cas, la face postérieure du verre possède une forme complexe. En effet, le design et la correction visuelle résultent ensemble de cette forme. L'usinage en reprise de la face postérieure du verre semi-fini nécessite alors d'équiper les laboratoires en machines capables de réaliser de telles formes. De telles machines, qui correspondent au procédé appelé «freeform», sont elles-mêmes complexes, et donc onéreuses. Pour ces raisons, l'usinage en reprise des faces postérieures des verres doit être regroupé dans un nombre restreint de laboratoires spécialisés, ce qui va à l'encontre d'une personnalisation des verres déplacée en aval dans la chaîne de fabrication et de distribution.

Les documents WO 03/035377 A, US 2003/003295 A1 et WO 2004/034095 A décrivent des verres ophtalmiques progressives comprenant une couche ayant un indice de réfraction variable.

Un but de la présente invention consiste donc à combiner une fabrication et une distribution flexibles de verres ophtalmiques, avec une possibilité de personnalisation de chaque verre en fonction d'au moins une caractéristique individuelle du porteur.

Pour cela, l'invention propose un verre ophtalmique de type verre progressif selon la revendication 1. Le verre comprend :

- un composant optique de base sensiblement transparent pour au moins une longueur d'onde de lumière visible, ledit composant optique de base étant un verre correcteur progressif, et
- au moins une couche disposée sur une face du composant optique de base, sensiblement transparente et ayant un indice de réfraction variable pour ladite longueur d'onde,

dans lequel la couche est structurée de sorte qu'au moins une dérivée de deuxième ordre de l'indice de réfraction variable par rapport à une coordonnée spatiale linéaire le long de la face du composant optique de base, exprimée en millimètres (mm), est supérieure à $10^{-4}$ mm$^{-1}$/e, en valeur absolue et à au moins un point de ladite face. Dans l'expression de ce seuil de valeur ainsi que dans tout ce qui suit, e est l'épaisseur de la couche d'indice de réfraction variable exprimée en millimètres.

En outre, la variation d'indice de réfraction de la couche ne présente pas de symétrie de révolution. Autrement dit, la variation de l'indice de réfraction de la couche est complexe, de sorte que la couche permet de simplifier le composant optique de base alors que le verre ophtalmique possède une fonction optique complexe. En particulier, une forme d'au moins une des faces du composant optique de base peut être simplifiée, en réalisant une partie de la fonction optique du verre ophtalmique au moyen de la couche d'indice de réfraction variable. Par exemple, un verre ophtalmique progressif peut être obtenu à partir d'un composant optique de base qui a des faces sphériques ou sphéro-toriques, en utilisant une couche dont les variations d'indice sont appropriées.

Lorsque des variations d'indice de réfraction d'une couche disposée sur un composant optique de base sont réalisées conformément à l'invention, le nombre de modèles distincts de composants optiques de base qui sont nécessaires pour satisfaire les besoins de correction ophtalmique d'une population peut être diminué. En effet, de telles variations de l'indice de réfraction de la couche modifient certaines caractéristiques optiques du verre, par rapport à un verre constitué seulement par le composant optique de base. Les caractéristiques modifiées peuvent être, par exemple, la puissance optique et/ou l'astigmatisme du verre ophtalmique. Dans le cas d'un verre progressif, les caractéristiques modifiées peuvent aussi concerner l'addition, la longueur de progression, et/ou le design du verre progressif, notamment.

Selon une première mise en œuvre de l'invention dans la chaîne de fabrication et de distribution des verres ophtalmiques, le verre comprenant le composant optique de base et la couche d'indice de réfraction variable est produit en usine sous la forme d'un verre semi-fini. L'indice de réfraction de la couche est ajusté ultérieurement en fonction de mesures effectuées sur un porteur du verre, en aval dans la chaîne de fabrication et de distribution des verres ophtalmiques. Par exemple, la couche d'indice de réfraction variable peut être utilisée pour obtenir une correction plus finement adaptée à l'amétropie et/ou au comportement du porteur, et/ou à toute caractéristique du porteur qu'on souhaite prendre en compte dans le calcul du verre pour obtenir une correction optimale. Pour un verre progressif, la couche d'indice de réfraction variable peut aussi être utilisée pour personnaliser le verre en fonction de caractéristiques physiques ou comportementales du porteur. De telles caractéristiques peuvent être évaluées ou mesurées sur le porteur dans un centre de vente au détail des verres, puis communiquées à un laboratoire qui réalise les variations appropriées de l'indice de réfraction de la couche.

Selon une seconde mise en œuvre de l'invention dans la chaîne de fabrication et de distribution des verres ophtalmiques, le verre semi-fini produit en usine comporte des variations de l'indice de réfraction de la couche disposée sur le composant optique de base. Autrement dit, les variations d'indice de réfraction de la couche sont réalisées en usine, c'est-à-dire en amont dans la chaîne de fabrication des verres ophtalmiques. Un grand nombre de modèles de verres semi-finis peuvent ainsi être obtenus à partir d'un nombre réduit de modèles de composants optiques de base. Une personnalisation de chaque verre ophtalmique peut encore être effectuée, par exemple en usinant une face du verre qui ne porte pas la couche.

Les variations de l'indice de réfraction de la couche peuvent être réalisées de diverses façons. Par exemple, la couche peut être constituée initialement d'un matériau actif, lorsqu'elle est formée sur le composant optique de base, puis l'indice de réfraction de la couche est modifié en utilisant un procédé approprié. Lorsque la couche est constituée d'un matériau photosensible, les variations de l'indice de réfraction peuvent être réalisées par photoinscription. Un tel procédé procure une grande facilité pour réaliser successivement des verres munis de couches ayant des variations différentes d'indice de réfraction.

Avantageusement, au moins une dérivée de deuxième ordre de l'indice de réfraction variable par rapport à une coordonnée spatiale linéaire le long de la face du composant optique, exprimée en millimètres, est supérieure à $2.10^{-4}$ $mm^{-1}$/e. Le nombre de modèles de composants optiques de base qui est suffisant pour satisfaire toutes les types et degrés de correction d'amétropie est alors encore réduit.

Les variations maximales de l'indice de réfraction de la couche qui peuvent être utilisées dans le cadre de l'invention dépendent du matériau actif mis en œuvre. Pour les verres réalisés par les inventeurs, chaque dérivée de deuxième ordre de l'indice de réfraction variable par rapport à une coordonnée spatiale linéaire le long de la face du composant optique, exprimée en millimètres, est inférieure à 0,1 $mm^{-1}$/e.

Dans le cadre de la présente invention, un effet prismatique quelconque peut être superposé aux modifications des caractéristiques optiques du verre ophtalmique qui résultent des variations de l'une au moins des dérivées de deuxième ordre de l'indice de réfraction de la couche. Un tel effet prismatique peut être obtenu, notamment, en ajoutant une composante de variation uniforme de l'indice de réfraction de la couche en fonction d'une coordonnée spatiale linéaire le long de la face du composant optique. Etant donné qu'elle est uniforme, une telle composante de variation de l'indice de réfraction ne modifie pas les dérivées de deuxième ordre de l'indice de réfraction de la couche, considérées dans l'invention.

En outre, l'indice de réfraction de la couche est supposé sensiblement constant selon la direction d'épaisseur de la couche, perpendiculairement à la face du composant optique. Tous les seuils de variation de l'indice de réfraction utilisés pour définir l'invention, y compris ceux qui concernent des dérivées de deuxième ordre de l'indice de réfraction, sont exprimés sous forme d'un quotient par rapport à l'épaisseur e de la couche. En effet, les modifications des caractéristiques optiques du verre qui résultent des variations de l'indice de réfraction de la couche sont sensiblement proportionnelles à l'épaisseur de la couche. En particulier, une couche d'épaisseur fixée présentant des variations déterminées d'indice de réfraction est sensiblement équivalente à une couche d'épaisseur double ayant des variations d'indice de réfraction deux fois plus faibles, vis-à-vis des caractéristiques optiques de la couche.

Préférentiellement, l'épaisseur e de la couche d'indice de réfraction variable est sensiblement constante entre des points différents de la face du composant optique de base. Cette épaisseur peut être comprise entre 0,1 et 1,0 mm, notamment. Une telle couche peut être formée facilement sur le composant optique en utilisant un matériau actif connu. En outre, les caractéristiques optiques du verre ophtalmique peuvent être modifiées dans une mesure suffisante.

La couche d'indice de réfraction variable peut être disposée sur la face antérieure ou sur la face postérieure du composant optique, en conditions d'utilisation du verre ophtalmique par un porteur. Eventuellement, le verre peut comprendre en outre un autre composant optique sensiblement transparent pour ladite longueur d'onde, disposé d'un côté de la couche d'indice de réfraction variable opposé au composant optique de base. La couche est alors enserrée entre les deux composants optiques, de sorte qu'elle est protégée contre des rayures accidentelles.

Selon un mode de réalisation préféré de l'invention, l'indice de réfraction de la couche varie progressivement le long de la face du composant optique de base, de sorte que le porteur du verre ne perçoit aucune gêne lors d'un balayage de son champ de vision par rotation de son œil. Les inventeurs ont déterminé qu'aucune irrégularité n'est perceptible lors d'un tel balayage lorsque la couche est structurée de sorte que, pour chaque dérivée de deuxième ordre de l'indice de réfraction variable par rapport à une coordonnée spatiale linéaire le long de la face du composant optique, exprimée en millimètres, et pour la dérivée mixte de deuxième ordre de l'indice de réfraction variable par rapport à deux de ces coordonnées, des valeurs respectives de ladite dérivée de deuxième ordre en deux points quelconques d'un disque de 5,5 millimètres de diamètre contenu dans la face du composant optique de base présentent un écart absolu inférieur à $10^{-3}$ $mm^{-1}$/e, quelque soit la position du disque à l'intérieur de la face du composant optique de base.

La couche d'indice de réfraction variable réalise un changement de design de verre progressif, par rapport au design du composant optique de base, tout en conservant des valeurs de puissance optique et d'astigmatisme sensiblement identiques le long de la ligne méridienne entre le point de vision de loin et le point de vision de près, par rapport aux valeurs correspondantes d'un verre constitué par le composant optique de base seulement. Pour cela, la couche est structurée de sorte que des valeurs absolues de dérivées de deuxième ordre de l'indice de réfraction variable par rapport à, respectivement, une coordonnée spatiale horizontale et une coordonnée spatiale verticale le long de la face du composant optique en condition d'utilisation du verre par le porteur, et exprimées en millimètres, ainsi que la valeur absolue de la dérivée mixte de deuxième ordre de l'indice de réfraction variable par rapport aux deux coordonnées spatiales horizontale et verticale, sont inférieures à $10^{-4}$ mm$^{-1}$/e en tout point de la ligne méridienne reliant le point de vision de loin et le point de vision de près du verre dans la face du composant optique de base. Les valeurs absolues de ces dérivées de deuxième ordre peuvent en outre être inférieures à $10^{-3}$ mm$^{-1}$/e en tout point de la face du composant optique de base, lorsque la couche d'indice de réfraction variable n'a pas d'autre fonction qu'une modification de la répartition de l'astigmatisme et/ou de la puissance optique dans les zones latérales du verre.

L'invention propose aussi une paire de lunettes de prescription comprenant une monture et au moins un verre ophtalmique tel que décrit précédemment.

D'autres particularités et avantages de la présente invention apparaîtront dans la description ci-après de quatre exemples de réalisation non limitatifs, en référence aux dessins annexés, dans lesquels :

- les figures 1a et 1b sont respectivement une vue en coupe et une vue en plan d'un verre ophtalmique selon un premier mode de réalisation de l'invention ;

- les figures 2a-2c sont des cartographies de variations d'indice de réfraction pour un deuxième mode de réalisation de l'invention ;

- les figures 2d et 2e sont des cartographies de contributions à la puissance optique et à l'astigmatisme pour un verre ophtalmique correspondant aux figures 2a-2c ;

- les figures 3a-3e correspondent aux figures 2a-2e pour un troisième mode de réalisation de l'invention ;

- les figures 4a-4e correspondent aux figures 2a-2e pour un quatrième mode de réalisation de l'invention ; et

la figure 5 est une vue en coupe d'un verre ophtalmique selon un cinquième mode de réalisation de l'invention.

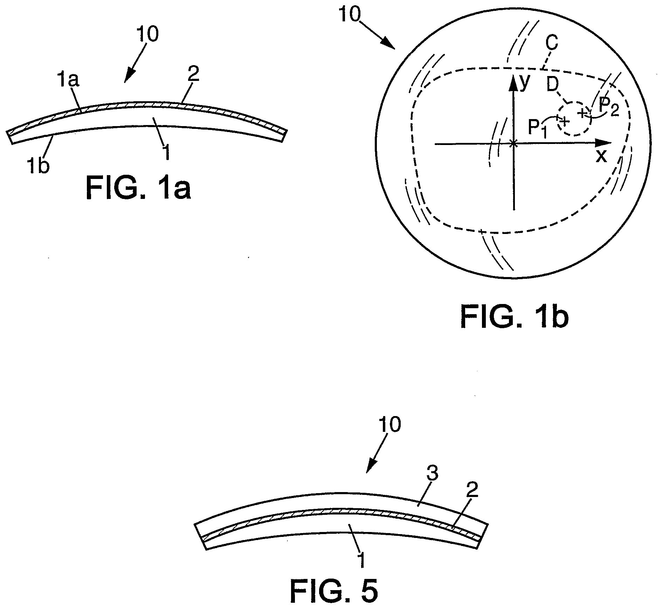

Conformément à la figure 1a, un verre ophtalmique 10 est constitué d'un composant optique de base 1, qui est limité par une face antérieure 1a et par une face postérieure 1b. Le composant 1 est transparent, et peut être en matériau minéral ou organique, caractérisé par une valeur d'indice de réfraction.

Le composant optique de base 1 est recouvert sur sa face 1a d'une couche de matériau actif 2. Dans tous les exemples décrits, la couche 2 possède une épaisseur constante, notée e et égale à 0,5 mm. Autrement dit, l'épaisseur e de la couche 2 est identique en tout point de la face 1a du composant 1.

L'utilisation du verre 10 par un porteur correspond à des directions variables d'observation au travers du verre. Un rayon lumineux provenant d'une direction d'observation donnée coupe chaque face du verre 1a, 1b en des points d'intersection respectifs, et passe par le centre de rotation de l'œil supposé fixe. Les points d'intersection du rayon lumineux avec chaque face 1a, 1b sont déterminés selon les principes de réfraction optique. Les valeurs de puissance optique et d'astigmatisme du verre progressif pour une direction d'observation donnée résultent alors des courbures de chaque face 1a et 1b aux points d'intersection du rayon optique, de la valeur de l'indice de réfraction du composant optique de base 1, ainsi que des variations de l'indice de réfraction de la couche 2, sur le trajet du rayon entre les points d'intersection avec chaque face.

A titre d'exemple, la couche 2 peut être constituée d'un matériau photo-actif, de sorte que l'indice de réfraction de la couche 2 peut être modifié localement en chaque point de la surface 1a par une irradiation appropriée de la couche à ce point. Les documents EP 1 225 458 et US 6 309 803 décrivent un matériau actif sensible à une lumière ultraviolette de longueur d'onde 365 nm (nanomètres), qui peut être utilisé pour réaliser la couche 2 selon l'invention. Un tel matériau actif peut polymériser selon deux phases différentes, qui sont sélectionnées par les conditions de polymérisation appliquées à la couche 2. La première phase correspond à un réseau de polymérisation organique. Elle est formée lorsque le matériau actif est irradié. La seconde phase correspond à un réseau de polymérisation minéral et est formée lorsque le matériau actif est chauffé. L'indice de réfraction de la première phase est inférieur à celui de la seconde phase.

Un tel matériau actif peut être déposé sur le composant 1 par trempage du composant 1 dans une solution de précurseurs. Un tel procédé de dépôt est couramment désigné par « dip-coating », en anglais. La solution comprend deux précurseurs susceptibles de former ensemble un réseau de polymérisation organique ou un réseau de polymérisation minéral. Les deux précurseurs sont le 3-(triméthoxysilyl)propyl méthacrylate et le produit de la réaction entre le n-propoxyde de zirconium et l'acide méthacrylique. De l'Irgacure 1800, disponible commercialement auprès du fournisseur CIBA par exemple, est en outre ajouté à la solution de précurseurs. Après le trempage du composant 1 dans la solution de précurseurs, le composant 1 est chauffé à une température supérieure ou égale à 60°C pendant environ 30 minutes. La couche de matériau actif 2, séchée, est ainsi obtenue sur la face 1a du composant 1.

Lorsqu'une portion du matériau actif de la couche 2 est irradiée avec une lumière ultraviolette de longueur d'onde 365 nm, le réseau organique de polymérisation se forme, avec une densité qui dépend de la durée et de l'intensité de l'irradiation. Le composant 1 est ensuite chauffé à une température supérieure ou égale à 100°C pendant 20 à 45 minutes. Le réseau de polymérisation minéral se forme alors. Dans les portions de la couche 2 qui n'ont pas été préalablement irradiées, il constitue une phase pure d'indice de réfraction élevé. Dans les portions de la couche 2 qui ont été préalablement irradiées, le réseau de polymérisation minéral est formé à partir des quantités de précurseurs qui n'ont pas été consommées par la polymérisation organique. Des valeurs d'indice de réfraction intermédiaires entre les valeurs extrêmes correspondant au réseau minéral pur et au réseau organique pur sont ainsi obtenues dans les portions irradiées.

A l'issue du chauffage de polymérisation selon le réseau minéral, les deux précurseurs sont intégralement consommés. Le matériau de la couche 2 est alors insensible à une nouvelle irradiation par de la lumière ultraviolette à la longueur d'onde de 365 nm. Les variations de l'indice de réfraction de la couche 2 qui ont été ainsi créées sont alors définitives.

De façon connue, un verre prêt à être assemblé avec une monture de lunettes est obtenu par détourage du verre 10 selon un contour C qui correspond à la forme de la monture (figure 1b). Le composant optique 1 peut être en particulier un verre solaire, destiné à procurer une protection contre l'éblouissement par absorption d'une partie de la lumière, un verre de renforcement de contraste par coloration ou par filtrage de polarisation, un verre correcteur d'amétropie, etc. Il peut s'agir notamment d'un verre afocal, unifocal, bifocal, multifocal, progressif ou comportant une surface diffractive, la couche d'indice variable étant placée, dans ce dernier cas, sur une surface réfractive du composant.

Dans les exemples qui suivent, on suppose que la couche 2 est irradiée de sorte que son indice de réfraction, noté n, est constant selon l'épaisseur de la couche 2 en chaque point de la surface 1a.

Selon un premier exemple non limitant, les variations d'indice de réfraction créées dans la couche 2 correspondent à des valeurs constantes de dérivées de deuxième ordre de cet indice, respectivement par rapport à deux coordonnées spatiales linéaires x et y définies sur la face 1a du composant 1 (figure b). De même, la dérivée mixte de deuxième ordre par rapport à x et y est constante. Autrement dit :

$$\frac{\partial^2 n}{\partial x^2} = C_1, \frac{\partial^2 n}{\partial y^2} = C_2, \frac{\partial^2 n}{\partial x \partial y} = C_3$$

où $C_1$, $C_2$ et $C_3$ sont des valeurs constantes. Dans le cas particulier où $C_1 = C_2$ et $C_3 = 0$, l'astigmatisme de la couche est nul, et sa puissance optique est définie par $C_1$.

Dans le cas plus général où $C_3$ n'est pas nulle, et où $C_1$ peut être différente de $C_2$, la couche 2 est alors équivalente à un verre correcteur unifocal ayant une puissance optique et un astigmatisme propres. Ces caractéristiques optiques de la couche 2 se combinent alors avec celles du composant optique de base 1 lors d'une utilisation du verre 10 par un porteur. A titre d'exemple, des valeurs de $C_1$, $C_2$ et $C_3$ respectivement égales à $-3.10^{-4}$ mm$^{-2}$, $-5.10^{-4}$ mm$^{-2}$ et $2.10^{-4}$ mm$^{-2}$ correspondent à une

contribution de la couche d'environ 0,25 dioptrie à la puissance optique du verre 10, et à une contribution d'environ 0,25 dioptrie à l'astigmatisme du verre 10, pour une épaisseur de la couche égale à 0,5 mm, et un indice de réfraction au point d'origine du verre (x=0 et y=0) égal à 1,502.

Ainsi, à partir de plusieurs composants optiques de base 1 identiques, il est possible d'obtenir des verres 10 correspondant à des prescriptions différentes, en irradiant différemment la couche 2 de chaque verre pour obtenir des valeurs variables de dérivées de deuxième ordre de l'indice de réfraction de la couche 2. Par exemple, des modèles disponibles du composant optique 1 peuvent correspondre à des valeurs de puissance optique et d'astigmatisme variant de 0,25 D (dioptrie) en 0,25 D. La couche 2 permet alors d'obtenir des valeurs de puissance optique et d'astigmatisme du verre 10 qui sont intermédiaires entre celles de deux modèles de composant 1. Pour cela, la couche 2 engendre une contribution à la puissance optique et à l'astigmatisme du verre qui se combine à celle du composant 1. Une correction d'amétropie personnalisée peut ainsi être obtenue, qui permet d'adapter chaque verre au degré d'amétropie du porteur avec une précision supérieure.

L'orientation des variations de l'indice n parallèlement à la face 1a, autrement dit l'orientation par rotation des axes x et y dans la face 1a, peut être variée. Elle est notamment adaptée de sorte que les caractéristiques optiques de la couche 2 et du composant 1 se combinent pour obtenir un verre 10 résultant qui correspond à la prescription d'astigmatisme du porteur, à la fois en valeur et en axe.

Dans les autres modes de réalisation qui sont décrits ci-dessous, le verre 10 a encore une structure telle qu'illustrée par les figures 1a et 1b, mais les axes x et y sont respectivement orientés horizontalement et verticalement, lorsque le verre est utilisé par le porteur en position droite de sa tête. Les valeurs positives de x déterminent une moitié latérale du verre 10 située à proximité du nez du porteur. Cette moitié du verre est appelée partie nasale du verre. A l'inverse, l'autre moitié latérale du verre, pour des valeurs négatives de x, est située à proximité de la tempe du porteur et est désignée par partie temporale du verre. Les valeurs positives de y déterminent la moitié supérieure du verre. Lorsque cette moitié est utilisée par le porteur, celui-ci regarde en vision de loin. Les valeurs négatives de y correspondent à la partie dite de vision intermédiaire et à la partie de vision de près du verre. Le montage du verre est effectué de sorte que, lorsque le porteur regarde droit devant lui, la direction de son regard passe par un point nommé croix de montage situé 4 mm au-dessus du point origine (x=0, y=0) de la face du verre. Le point de vision de loin est généralement situé 4 mm au-dessus de la croix de montage.

Le composant optique de base 1 est lui-même un verre correcteur progressif. Le verre 10 est alors aussi un verre correcteur progressif.

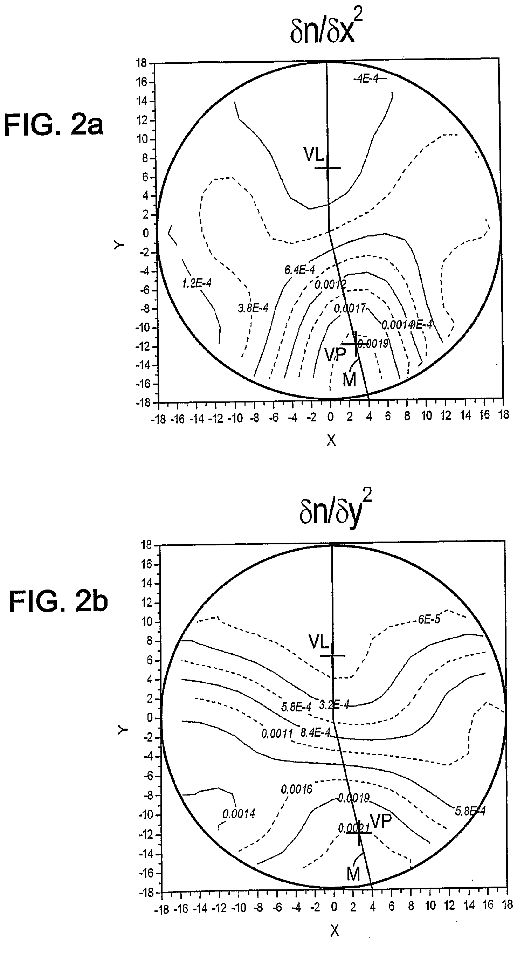

Les figures 2a-2c sont des cartographies des dérivées de deuxième ordre de l'indice de réfraction n de la couche 2, respectivement par rapport à x, par rapport à y et par rapport à x et y : $\dfrac{\partial^2 n}{\partial x^2}$ pour la figure 2a,

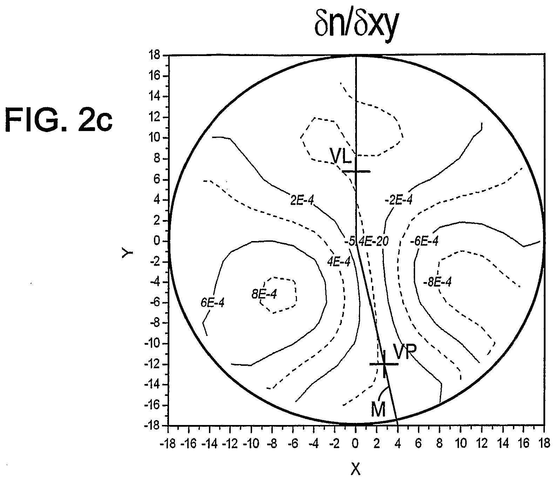

$\dfrac{\partial^2 n}{\partial y^2}$ pour la figure 2b, et $\dfrac{\partial^2 n}{\partial x \partial y}$ pour la figure 2c. Les coordonnées x et y sont exprimées en millimètres. Chacune de ces cartographies est limitée par le bord périphérique circulaire du verre 10. Les verres réalisés par les inventeurs ont tous un diamètre de 36 mm (millimètres). Chaque courbe tracée sur une des cartographies relie des points de la face 1a qui sont associés à une même valeur de dérivée de deuxième ordre. Cette valeur est indiquée sur la courbe correspondante.

Conformément aux figures 2a et 2b relatives au deuxième exemple non limitant, les deux dérivées de deuxième ordre de n par rapport à x et y ont des valeurs absolues faibles dans la partie supérieure du verre (pour des valeurs de y positives), inférieures à $10^{-3}$ mm$^{-2}$. En outre, ces deux dérivées de deuxième ordre présentent des valeurs croissantes dans la partie inférieure du verre (pour des valeurs de y négatives), en se déplaçant le long d'une ligne méridienne M sensiblement confondue avec l'axe y (x=0) dans la partie supérieure du verre, et légèrement déviée du côté des valeurs positives de x dans la partie inférieure du verre.

Conformément à la figure 2c, la dérivée mixte de deuxième ordre de n par rapport à x et y présente une valeur maximale atteinte en un point situé dans le quart temporal inférieur du verre 10 (pour des valeurs de x et y négatives), et une valeur minimale atteinte en un point situé dans le quart nasal inférieur du verre (pour des valeurs de x positives et des valeurs de y négatives). Ces valeurs sont respectivement $+8.10^{-4}$ mm$^{-2}$ et $-8.10^{-4}$ mm$^{-2}$. De façon plus globale, la cartographie de la dérivée mixte de deuxième ordre de n par rapport à x et y présente une structure approximativement antisymétrique par rapport à la ligne méridienne M. Autrement dit, deux points du verre associés à des valeurs respectives de la dérivée mixte qui sont opposées sont situés approximativement de façon symétrique l'un par rapport à l'autre, relativement à la ligne M.

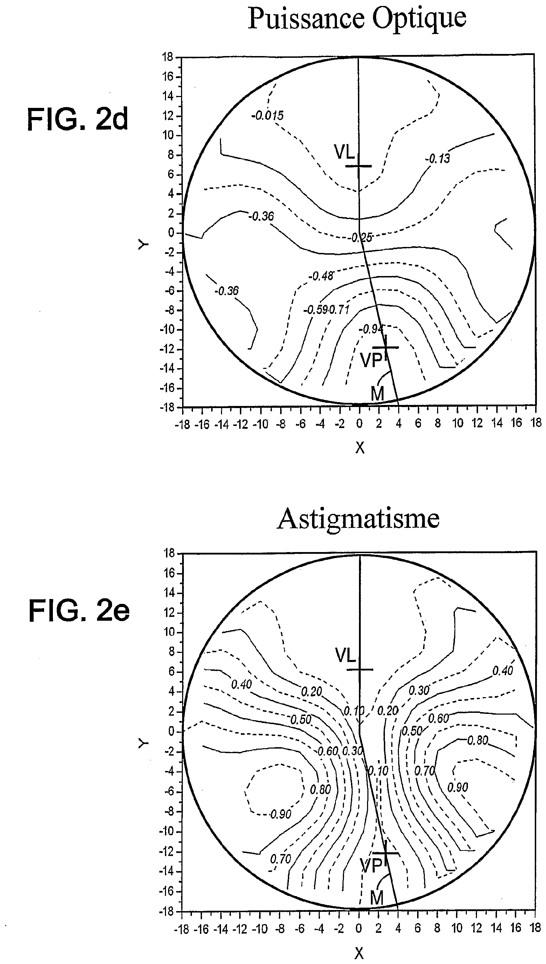

Les figures 2d et 2e illustrent respectivement les contributions de la couche 2 aux variations de puissance optique et d'astigmatisme du verre 10. Pour chaque point de coordonnées x et y de la face du verre, on indique les caractéristiques optiques obtenues dans la direction de regard passant par le centre de rotation de l'œil et ce point. Les lignes indiquées sur la figure 2d sont des lignes d'isopuissance de la couche 2, qui relient des points de la face 1a qui correspondent à une même contribution de la couche 2 à la puissance optique du verre 10, pour des directions d'observation au travers du verre 10 passant par ces points. Cette valeur de puissance optique est indiquée en dioptries pour chaque ligne d'isopuissance.

Deux points du verre 10, VL et VP, sont indiqués sur les cartographies des figures 2d et 2e. Ils correspondent à l'intersection de la direction d'observation d'un porteur du verre 10 avec la face 1a du composant 1, respectivement pour une situation de vision de loin (VL) et pour une situation de vision de près (VP). Autour du point de vision de loin VL, la contribution de la couche 2 à la puissance optique est d'environ -0,01 D, alors que cette contribution est d'environ -1,0 D au point de vision de près VP. En outre, la contribution de la couche 2 à la puissance optique décroît, en valeur absolue, de part et d'autre du point VP en se déplaçant parallèlement à l'axe x. La couche 2 engendre donc une réduction d'une correction de presbytie du verre 10 autour du point de vision de près VP, par rapport à la correction procurée uniquement par le composant de base 1 au point VP. Simultanément, la couche 2 ne modifie pas sensiblement la puissance optique autour du point de vision de loin VL, par rapport à la valeur correspondante pour le composant 1 seul. Autrement dit, la couche 2 diminue l'addition du verre 10 par rapport à celle d'un verre qui serait constitué uniquement par le composant optique de base 1. La différence absolue, notée A, de contribution de puissance optique de la couche 2 entre les points VP et VL est, pour l'exemple correspondant aux figures 2a-2e, environ 0,8 D. On peut vérifier que les dérivées secondes de n par rapport à x d'une part (figure 2a), et par rapport à y d'autre part (figure 2b), possèdent chacune une valeur absolue supérieure à $0,8.10^{-3}$ mm$^{-1}$.D$^{-1}$ x A/e = $0,8.10^{-3}$ x 0,8/0,5 = $1,3.10^{-3}$ mm$^{-2}$ au point de vision de près VP.

On vérifie de même que les valeurs maximale et minimale de la dérivée mixte de n par rapport à x et y (figure 2c) sont sensiblement égales, en valeurs absolues, à $0,8.10^{-3}$ mm$^{-1}$.D$^{-1}$ x A/(2 x e) = $0,8.10^{-3}$ x 0,8/(2 x 0,5) = $6,4.10^{-4}$ mm$^{-2}$.

La nappe de répartition de l'indice n en fonction des deux coordonnées x et y possède alors une forme d'amphithéâtre : n présente une valeur quasi-constante dans la partie supérieure du verre, pour des valeurs positives de y, et une valeur qui augmente radialement dans la partie inférieure du verre, pour des valeurs négatives de y. L'indice de réfraction n est alors maximal au niveau de la partie inférieure de la circonférence du verre, et la différence entre la valeur maximale de l'indice n et la valeur de n dans la partie supérieure du verre est supérieure à 0,04 x 0,8/0,5 = 0,064. La déviation prismatique du verre mesurée au point origine (x=0, y=0), généralement appelé point de référence prismatique, est nulle.

Les lignes indiquées sur la figure 2e sont des lignes d'isoastigmatisme, qui relient des points de la face 1a qui correspondent à une même contribution de la couche 2 à l'astigmatisme du verre 10. Il apparaît que la couche 2 n'introduit pas de contribution d'astigmatisme significative le long de la ligne méridienne M du verre 10, qui relie les points de vision de loin VL et de près VP. Par contre, la contribution de la couche 2 à l'astigmatisme du verre 10 croît à partir de la ligne méridienne M en se déplaçant latéralement, du côté nasal et du côté temporal.

Il est à noter que dans ce deuxième exemple correspondant à un changement d'addition, la couche 2 n'engendre pas de déplacement des points VP et VL, par rapport aux positions de ces points définies par le composant optique de base 1 lorsque celui-ci est utilisé seul pour constituer un verre correcteur progressif.

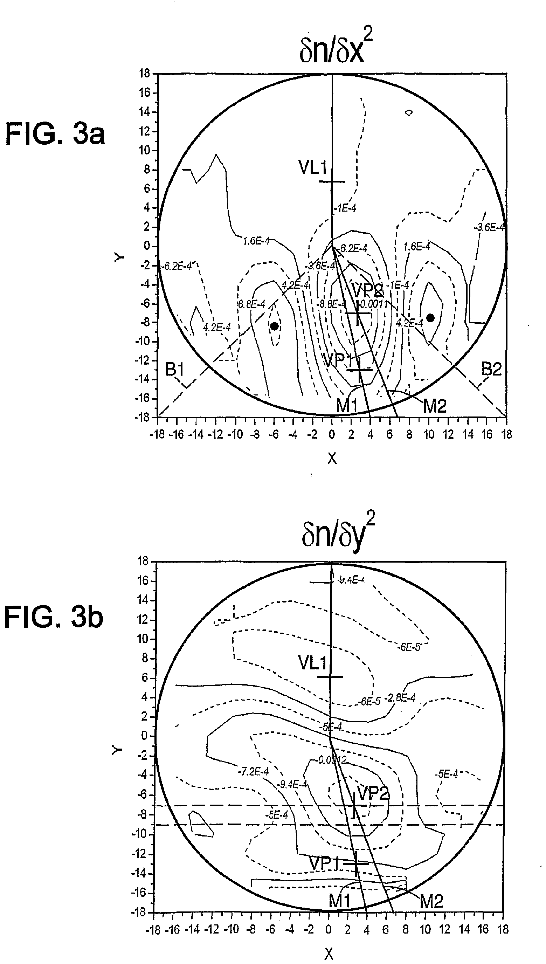

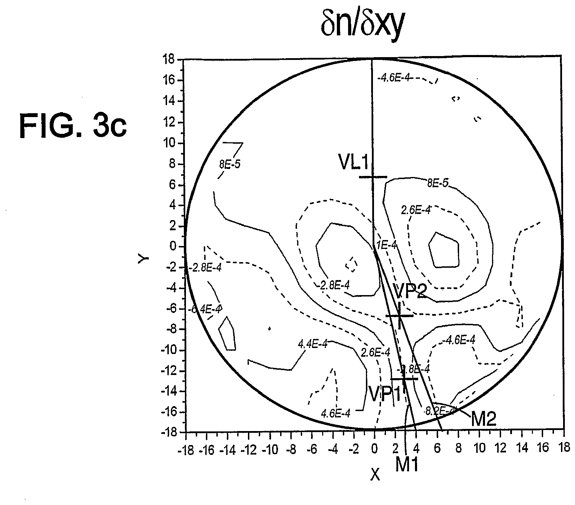

Le troisième exemple qui est non limitant, décrit maintenant en référence aux figures 3a-3e, est un verre ophtalmique dont la couche 2 a pour effet de déplacer le point de vision de près VP, par rapport à la position de VP pour le composant optique de base 1, lorsque celui-ci est utilisé sans couche pour constituer un verre ophtalmique. Autrement dit, la couche 2 réalise un changement de longueur de progression du verre. Le composant de base 1 est identique à celui de l'exemple précédent : il s'agit d'un verre progressif dont le point de vision de près et le point de vision de loin sont respectivement notés VP1 et VL1 sur les figures 3a-3e. VP1 a pour coordonnées approximatives $x_1$ = 2,7 mm et $y_1$ = -13,0 mm. La ligne méridienne d'un verre qui serait constitué seulement par le composant 1 est notée M1.

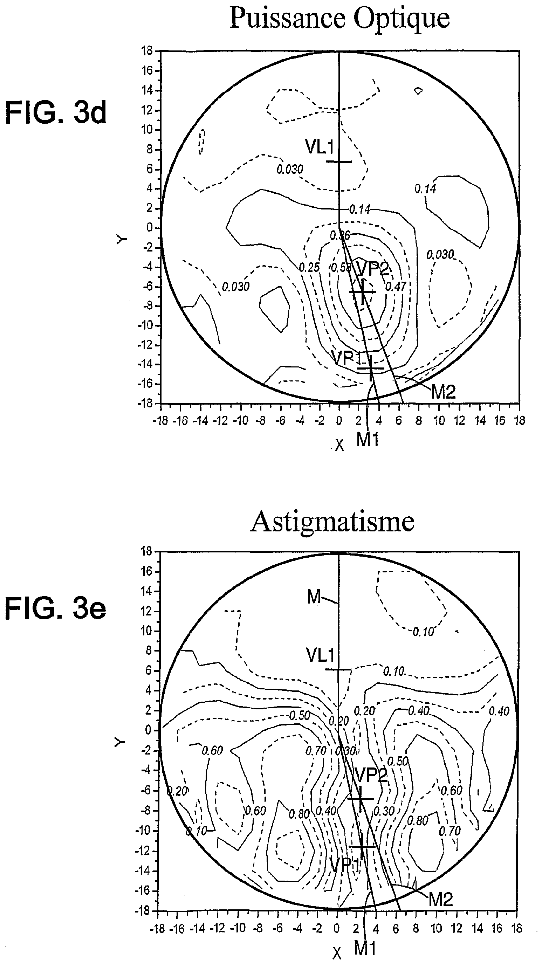

De façon connue, le point de vision de près d'un verre progressif est situé au centre d'une zone du verre dans laquelle la puissance optique est sensiblement constante et maximale. Simultanément, l'astigmatisme résultant, qui est la valeur résiduelle d'astigmatisme du porteur équipé du verre (défini dans l'article «PAL performance analysis for torical prescription» de Thierry Baudart, Essilor International, «Technical Digest» 1996, pp. 190/SuA3, présenté à la conférence «Vision Science and its Applications», 1-5 février 1996, Santa-Fe, New Mexico), présente une valeur faible au point de vision de près, ou à proximité de celui-ci. D'après les cartographies de puissance optique et d'astigmatisme des figures 3d et 3e, la couche 2 est elle-même équivalente à un verre progressif fictif ayant son propre point de vision de près, noté VP2 et ayant pour coordonnées approximatives $x_2$ = 2,7 mm et $y_2$ = -7,0 mm. Le point de vision de près du verre 10 est alors situé à une position intermédiaire entre VP1 et VP2. Dans ce troisième exemple, la couche 2 engendre donc un déplacement du point de vision de près, de la position de VP1 vers une position intermédiaire entre celles de VP1 et VP2.

Les lignes référencées M1 et M2 sur les figures 3a-3e sont respectivement les lignes méridiennes du composant 1 seul et du verre 10 comprenant le composant 1 et la couche 2. D'après les figures 3a et 3b, les dérivées de deuxième ordre de l'indice n de la couche 2 respectivement par rapport à x et y présentent chacune un minimum situé à proximité de VP2, en un point situé approximativement sur la ligne méridienne M2. Chacun de ces minima correspond à un maximum de la valeur absolue correspondante. Cette valeur absolue maximale de la dérivée de deuxième ordre par rapport à x est d'environ $1,1.10^{-3}$ mm$^{-2}$. Pour la coordonnée y, la valeur absolue maximale atteinte en un point de la ligne méridienne M2 est environ $1,5.10^{-3}$ mm$^{-2}$. Ces deux valeurs sont supérieures à $10^{-4}$ mm$^{-1}$/e = $2.10^{-4}$ mm$^{-2}$.

D'après la figure 3a, la dérivée de deuxième ordre de l'indice n par rapport à x présente en outre deux maxima. Chacun de ces maxima est atteint en un point situé à proximité d'une des deux bissectrices B1 et B2, respectivement des quarts inférieurs nasal et temporal du verre. Les bissectrices B1 et B2 sont représentées en traits interrompus.

En outre, d'après la figure 3b, la dérivée de deuxième ordre de l'indice n par rapport à y passe par une valeur absolue maximale en se déplaçant le long de lignes parallèles à l'axe x dans la partie inférieure du verre 10 (lignes en traits interrompues sur la figure 3b).

Dans la partie supérieure du verre, les dérivées de deuxième ordre de l'indice n respectivement par rapport à x (figure 3a) et par rapport à y (figure 3b) sont inférieures à $10^{-4}$ mm$^{-1}$/e = $10^{-4}$/0,5 = $2.10^{-4}$ mm$^{-2}$.

Enfin, comme dans le deuxième exemple, la cartographie de la dérivée mixte de deuxième ordre de n par rapport à x et y présente une structure approximativement antisymétrique par rapport à la ligne méridienne M2.

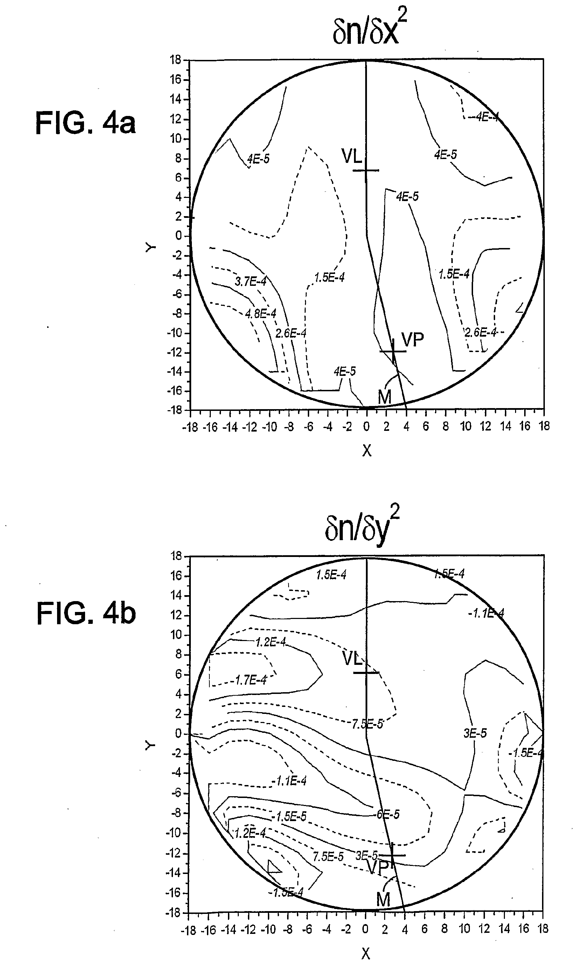

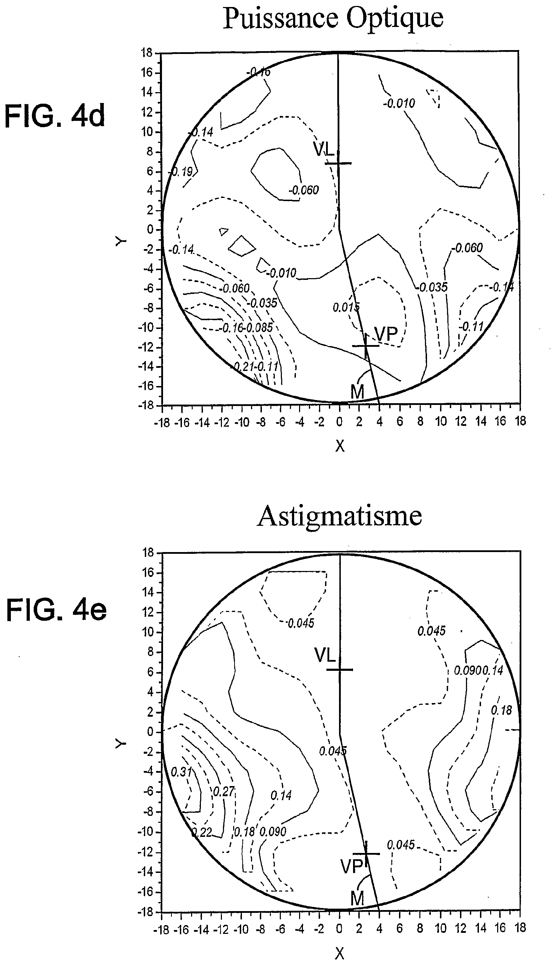

Dans les deux exemples précédents, la couche 2 est conçue pour engendrer une contribution à la puissance optique du verre 10 dont la valeur absolue est maximale en un point de la méridienne, à proximité du point de vision de près du verre. A l'inverse, le quatrième exemple étant un exemple de réalisation de l'invention qui est maintenant décrit en référence aux figures 4a-4e illustre une contribution de la couche 2 aux caractéristiques optiques du verre qui est principalement répartie en dehors de la ligne méridienne. Ceci apparaît sur les cartographies des figures 4d et 4e, qui montrent que les contributions de la couche 2 respectivement à la puissance optique et à l'astigmatisme du verre 10 sont maximales, en valeurs absolues, à proximité de la périphérie du verre dans les quarts inférieurs gauche et droit du verre. Une telle couche 2 réalise une modification du design du verre progressif, par rapport au design du composant optique de base 1. En particulier, la couche 2 peut être structurée de sorte que le verre 10 procure au porteur un champ de vision de loin sensiblement dépourvu d'astigmatisme plus large ou plus étroit, selon la direction horizontale x, qu'un champ fictif de vision de loin sensiblement dépourvu d'astigmatisme associé au composant optique de base 1 utilisé seul pour constituer verre ophtalmique.

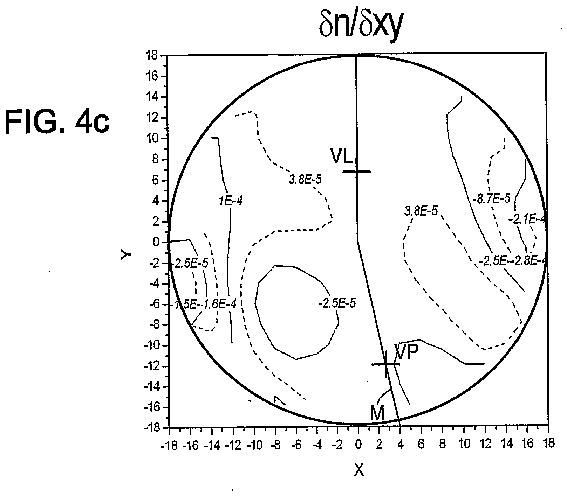

Pour cela, les dérivées de deuxième ordre de l'indice n de la couche 2 par rapport à x (figure 4a) et par rapport à y (figure 4b), ainsi que la dérivée mixte par rapport à x et y (figure 4c) sont inférieures à $10^{-4}$ mm$^{-1}$/e = $10^{-4}$/0,5 = $2.10^{-4}$ mm$^{-2}$ en chaque point de la ligne méridienne M. Les valeurs absolues maximales de ces dérivées sont atteintes en des points situés dans les parties latérales du verre 10.

Les quatre exemples décrits en détail ci-dessus présentent des variations progressives de l'indice de réfraction n de la couche 2. On peut vérifier que pour chacun de ces exemples, chaque dérivée de deuxième ordre de n présente des écarts de valeurs inférieurs à $10^{-3}$ mm$^{-1}$/e = $10^{-3}$/0,5 = $2.10^{-3}$ mm$^{-2}$ entre deux points quelconques P1 et P2 situés à l'intérieur d'un disque D de 5,5 millimètres (figure 1b), quelque soit la position du disque D dans la face 1a du composant optique de base 1. Il est entendu que lorsque l'indice n est ajusté numériquement, l'écart minimal entre deux valeurs de n réalisées en des pixels adjacents de la face 1a ne peut être considéré comme créant un écart de valeur de dérivée de deuxième ordre au delà de $10^{-3}$ mm$^{-1}$/e. Les valeurs des dérivées doivent alors être évaluées sur un nombre approprié de pixels.

En outre, dans tous ces exemples de réalisation, qu'ils concernent une modification de l'astigmatisme du verre, un changement d'addition, un changement de longueur de progression ou un changement de design introduit par la couche, les variations de l'indice de réfraction de la couche ne présentent aucune symétrie de révolution. Une telle absence de symétrie, qui permet à la couche de réaliser une fonction optique complexe, est visible sur les cartographies de variations d'indice correspondant à chaque exemple.

De nombreuses modifications de l'invention peuvent être apportées par rapport aux exemples de réalisation qui ont été décrits en détail. En particulier, la couche 2 peut être formée sur la face postérieure 1b du composant optique de base 1. Comme illustré par la figure 5, la couche 2 peut aussi être recouverte d'un autre composant optique transparent, référencé 3, de sorte que la couche 2 est enserrée entre les deux composants 1 et 3. La couche 2 est ainsi protégée contre des rayures ou des agressions chimiques éventuelles. Dans ce cas, les variations de l'indice de réfraction n peuvent être réalisées avant ou après l'insertion de la couche 2 entre les deux composants 1 et 3, en fonction du procédé utilisé pour varier l'indice de réfraction n.

Enfin, le verre ophtalmique peut correspondre à des états différents d'élaboration lorsque l'indice de réfraction de la couche est modulé pour engendrer des contributions à la puissance optique et/ou à l'astigmatisme du verre. Notamment, les faces du verre peuvent présenter des répartitions définitives de sphère moyenne et de cylindre. L'indice de réfraction variable de la couche peut alors être modulé pour personnaliser le verre en fonction du porteur. Alternativement, le verre obtenu après la modulation de l'indice de réfraction de la couche peut être un verre semi-fini. Dans ce cas, l'une de ses faces est destinée à être usinée en reprise ultérieurement de façon à conférer à celle-ci des valeurs de sphère moyenne et de cylindre adaptées en fonction de mesures effectuées sur le porteur du verre.

**Revendications**

1. Verre ophtalmique (10) de type verre progressif, comprenant :

- un composant optique de base (1) sensiblement transparent pour au moins une longueur d'onde de lumière visible, ledit composant optique de base étant un verre correcteur progressif, et
- au moins une couche (2) disposée sur une face du composant optique de base (1a), sensiblement transparente et ayant un indice de réfraction variable pour ladite longueur d'onde,

dans lequel la couche (2) est structurée de sorte qu'au moins une dérivée de deuxième ordre de l'indice de réfraction variable par rapport à une coordonnée spatiale linéaire (x, y) le long de la face du composant optique de base (1a), exprimée en millimètres, est supérieure à $10^{-4}$ mm$^{-1}$/e, en valeur absolue et à au moins un point de ladite face, e étant l'épaisseur de la couche d'indice de réfraction variable (2) exprimée en millimètres, et dans lequel la variation d'indice de réfraction de la couche (2) ne présente pas de symétrie de révolution, **caractérisé en ce que** la couche (2) est structurée en outre de sorte que des valeurs absolues de dérivées de deuxième ordre de l'indice de réfraction variable par rapport à, respectivement, une coordonnée spatiale horizontale (x) et une coordonnée spatiale verticale (y) le long de la face du composant optique (1a) en condition d'utilisation du verre (10) par un porteur, et exprimées en millimètres, ainsi qu'une valeur absolue d'une dérivée mixte de deuxième ordre de l'indice de réfraction variable par rapport aux deux coordonnées spatiales horizontale (x) et verticale (y), sont inférieures à $10^{-4}$ mm$^{-1}$/e en tout point d'une ligne méridienne (M) reliant un point de vision de loin (VL) et un point de vision de près (VP) du verre dans la face du composant optique de base (1a).

2. Verre ophtalmique selon la revendication 1, dans lequel au moins une dérivée de deuxième ordre de l'indice de réfraction variable par rapport à une coordonnée spatiale linéaire (x, y) le long de la face du composant optique (1a), exprimée en millimètres, est supérieure à $2.10^{-4}$ mm$^{-1}$/e, e étant l'épaisseur de la couche d'indice de réfraction variable (2) exprimée en millimètres.

3. Verre ophtalmique selon la revendication 1 ou 2, dans lequel l'épaisseur e de la couche d'indice de réfraction variable (2) est sensiblement constante entre des points différents de la face du composant optique de base (1a).

4. Verre ophtalmique selon l'une quelconque des revendications 1 à 3, dans lequel l'épaisseur e de la couche d'indice de réfraction variable (2) est comprise entre 0,1 et 1,0 mm.

5. Verre ophtalmique selon la revendication 4, comprenant en outre un autre composant optique (3) sensiblement transparent pour ladite longueur d'onde, disposé d'un côté de la couche d'indice de réfraction variable (2) opposé au composant optique de base (1).

6. Verre ophtalmique selon l'une quelconque des revendications 1 à 5, dans lequel la couche (2) est structurée en outre de sorte que, pour chaque dérivée de deuxième ordre de l'indice de réfraction variable par rapport à une coordonnée spatiale linéaire (x, y) le long de la face du composant optique (1a), exprimée en millimètres, et pour chaque dérivée mixte de deuxième ordre de l'indice de réfraction variable par rapport à deux desdites coordonnées, des valeurs respectives de ladite dérivée de deuxième ordre en deux points quelconques d'un disque (D) de 5,5 millimètres de diamètre contenu dans la face du composant optique de base (1a) présentent un écart absolu inférieur à $10^{-3}$ mm$^{-1}$/e, e étant l'épaisseur de la couche d'indice de réfraction variable (2) exprimée en millimètres, quelque soit la position du disque (D) à l'intérieur de la face du composant optique de base.

7. Verre ophtalmique selon l'une quelconque des revendications 1 à 6, dans lequel la couche d'indice de réfraction variable (2) est structurée en outre de sorte que le verre (10) procure au porteur un champ de vision de loin sensiblement dépourvu d'astigmatisme plus large, selon la direction horizontale (x), qu'un champ fictif de vision de loin sensiblement dépourvu d'astigmatisme associé au composant optique de base (1) utilisé seul comme verre ophtalmique.

8. Verre ophtalmique selon l'une quelconque des revendications 1 à 6, dans lequel la couche d'indice de réfraction variable (2) est structurée en outre de sorte que le verre (10) procure au porteur un champ de vision de loin sensiblement dépourvu d'astigmatisme plus étroit, selon la direction horizontale (x), qu'un champ fictif de vision de loin sensiblement dépourvu d'astigmatisme associé au composant optique de base (1) utilisé seul comme verre ophtalmique.

9. Lunettes de prescription comprenant une monture et au moins un verre ophtalmique (10) selon l'une quelconque des revendications 1 à 8.

**Patentansprüche**

1. Ophthalmisches Glas (10) vom Gleitsichtglastyp, umfassend:

- eine optische Basiskomponente (1), die im Wesentlichen transparent ist, für mindestens eine Wellenlänge sichtbaren Lichts, wobei die optische Basiskomponente ein Gleitsichtkorrekturglas ist, und
- mindestens eine Schicht (2), die auf einer Fläche der optischen Basiskomponente (1a) angeordnet ist, die im Wesentlichen transparent ist und einen variablen Brechungsindex für die Wellenlänge aufweist,

wobei die Schicht (2) so strukturiert ist, dass mindestens eine Ableitung zweiter Ordnung des variablen Brechungsindex bezogen auf eine lineare Raumkoordinate (x, y) entlang der Fläche der optischen Basiskomponente (1a), die in Millimetern ausgedrückt wird, größer als $10^{-4}$ mm$^{-1}$/e im Absolutwert und an mindestens einem Punkt der Fläche ist, wobei e die Dicke der Schicht mit variablem Brechungsindex (2) ist, die in Millimetern ausgedrückt wird, und wobei die Variation des Brechungsindex der Schicht (2) keine Drehsymmetrie aufweist, **dadurch gekennzeichnet, dass** die Schicht (2) ferner so strukturiert ist, dass Absolutwerte von Ableitungen zweiter Ordnung des variablen Brechungsindex bezogen auf eine horizontale Raumkoordinate (x) bzw. eine vertikale Raumkoordinate (y) entlang der Fläche der optischen Komponente (1a) im Zustand des Gebrauchs des Glases (10) durch einen Benutzer, und in Millimetern ausgedrückt werden, sowie ein Absolutwert einer gemischten Ableitung zweiter Ordnung des variablen Brechungsindex bezogen auf zwei horizontale (x) und vertikale (y) Raumkoordinaten an jedem Punkt einer Meridianlinie (M), die einen Fernsichtpunkt (VL) und einen Nahsichtpunkt (VP) des Glases in der Fläche der optischen Basiskomponente (1a) verbindet, kleiner als $10^{-4}$ mm$^{-1}$/e sind.

2. Ophthalmisches Glas nach Anspruch 1, wobei mindestens eine Ableitung zweiter Ordnung des variablen Brechungsindex bezogen auf eine lineare Raumkoordinate (x, y) entlang der Fläche der optischen Basiskomponente (1a), die in Millimetern ausgedrückt wird, größer als $2.10^{-4}$ mm$^{-1}$/e ist, wobei e die Dicke der Schicht mit variablem Brechungsindex (2) ist, die in Millimetern ausgedrückt wird.

3. Ophthalmisches Glas nach Anspruch 1 oder 2, wobei die Dicke e der Schicht mit variablem Brechungsindex (2) zwischen verschiedenen Punkten der Fläche der optischen Basiskomponente (1a) im Wesentlichen konstant ist.

4. Ophthalmisches Glas nach einem der Ansprüche 1 bis 3, wobei die Dicke e der Schicht mit variablem Brechungsindex (2) zwischen 0,1 und 1,0 mm beträgt.

5. Ophthalmisches Glas nach Anspruch 4, ferner umfassend eine andere, im Wesentlichen transparente optische Komponente (3) für die Wellenlänge, die auf einer Seite der Schicht mit variablem Brechungsindex (2) angeordnet ist, die der optischen Basiskomponente (1) gegenüberliegt.

6. Ophthalmisches Glas nach einem der Ansprüche 1 bis 5, wobei die Schicht (2) ferner so strukturiert ist, dass für jede Ableitung zweiter Ordnung des variablen Brechungsindex bezogen auf eine lineare Raumkoordinate (x, y) entlang der Fläche der optischen Komponente (1a), die in Millimetern ausgedrückt wird, und für jede gemischte Ableitung zweiter Ordnung des variablen Brechungsindex bezogen auf zwei der Koordinaten, jeweilige Werte der Ableitung zweiter Ordnung an zwei beliebigen Punkten einer Scheibe (D) mit einem Durchmesser von 5,5 Millimetern, die in der Fläche der optischen Basiskomponente (1a) enthalten ist, eine absolute Abweichung kleiner als $10^{-3}$ mm$^{-1}$/e aufweisen, wobei e die Dicke der Schicht mit variablem Brechungsindex (2) ist, die in Millimetern ausgedrückt wird, unabhängig von der Position der Scheibe (D) innerhalb der Fläche der optischen Basiskomponente.

7. Ophthalmisches Glas nach einem der Ansprüche 1 bis 6, wobei die Schicht mit variablem Brechungsindex (2) ferner so strukturiert ist, dass das Glas (10) dem Träger ein Fernsichtfeld im Wesentlichen ohne Astigmatismus verleiht, das in der horizontalen Richtung (x) breiter als ein fiktives Fernsichtfeld im Wesentlichen ohne Astigmatismus ist, das der optischen Basiskomponente (1) zugeordnet ist, die allein als ophthalmisches Glas genutzt wird.

8. Ophthalmisches Glas nach einem der Ansprüche 1 bis 6, wobei die Schicht mit variablem Brechungsindex (2) ferner so strukturiert ist, dass das Glas (10) dem Träger ein Fernsichtfeld im Wesentlichen ohne Astigmatismus verleiht, das in der horizontalen Richtung (x) schmaler als ein fiktives Fernsichtfeld im Wesentlichen ohne Astigmatismus ist, das der optischen Basiskomponente (1) zugeordnet ist, die allein als ophthalmisches Glas genutzt wird.

9. Brille umfassend ein Gestell und mindestens ein ophthalmisches Glas (10) nach einem der Ansprüche 1 bis 8.

**Claims**

1. Ophthalmic lens (10) of progressive lens type, comprising:

- an optical base component (1) substantially transparent for at least one wavelength of visible light, said optical base component being a progressive correcting lens, and
- at least one layer (2) placed on a face of the optical base component (1a), substantially transparent and having a variable refractive index at said wavelength,

wherein the layer (2) is structured in such a way that at least one second-order derivative of the variable refractive index with respect to a linear spatial coordinate (x, y) along the face of the optical base component (1a), expressed in millimetres, is greater than $10^{-4}$ mm$^{-1}$/e, in absolute value and at at least one point of said face, e being the thickness of the variable refractive index layer (2) expressed in millimetres, and wherein the refractive index variation of the layer (2) has no symmetry of revolution, **characterized in that** the layer (2) is structured also in such a way that absolute values of second-order derivatives of the variable refractive index with respect to, respectively, a horizontal spatial coordinate (x) and a vertical spatial coordinate (y) along the face of the optical component (1a) in condition of use of the lens (10) by a wearer, and expressed in millimetres, and an absolute value of a mixed second-order derivative of the variable refractive index with respect to both horizontal (x) and vertical (y) spatial coordinates, are less than $10^{-4}$ mm$^{-1}$/e at any point of the meridian line (M) linking a far vision point (VL) and a near vision point (VP) of the lens in the face of the optical base component (1a).

2. Ophthalmic lens according to Claim 1, wherein at least one second-order derivative of the variable refractive index with respect to a linear spatial coordinate (x, y) along the face of the optical component (1a), expressed in millimetres, is greater than $2.10^{-4}$ mm$^{-1}$/e, e being the thickness of the variable refractive index layer (2) expressed in millimetres.

3. Ophthalmic lens according to Claim 1 or 2, wherein the thickness e of the variable refractive index layer (2) is substantially constant between different points of the face of the optical base component (1a).

4. Ophthalmic lens according to any one of Claims 1 to 3, wherein the thickness e of the variable refractive index layer (2) is between 0.1 and 1.0 mm.

5. Ophthalmic lens according to Claim 4, also comprising another optical component (3) substantially transparent for said wavelength, based on one side of the variable refractive index layer (2) opposite the optical base component (1).

6. Ophthalmic lens according to any one of Claims 1 to 5, wherein the layer (2) is also structured in such a way that, for each second-order derivative of the variable refractive index with respect to a linear spatial coordinate (x, y) along the face of the optical component (1a), expressed in millimetres, and for each mixed second-order derivative of the variable refractive index with respect to two of said coordinates, respective values of said second-order derivative at any two points of a disc (D) of 5.5 millimetres diameter contained in the face of the optical base component (1a) exhibit an absolute difference less than $10^{-3}$ $mm^{-1}/e$, e being the thickness of the variable refractive index layer (2) expressed in millimetres, regardless of the position of the disc (D) in the face of the optical base component.

7. Ophthalmic lens according to any one of Claims 1 to 6, wherein the variable refractive index layer (2) is also structured in such a way that the lens (10) gives the wearer a far vision field that has substantially no wider astigmatism, in the horizontal direction (x) than a hypothetical far vision field that has substantially no astigmatism associated with the optical base component (1) used alone as ophthalmic lens.

8. Ophthalmic lens according to any one of Claims 1 to 6, wherein the variable refractive index layer (2) is also structured in such a way that the lens (10) gives the wearer a far vision field that has substantially no narrower astigmatism, in the horizontal direction (x), than a hypothetical far vision field that has substantially no astigmatism associated with the optical base component (1) used alone as ophthalmic lens.

9. Prescription glasses comprising a frame and at least one ophthalmic lens (10) according to any one of Claims 1 to 8.

FIG. 1a

FIG. 1b

FIG. 5

$$\delta n/\delta x^2$$

FIG. 2a

$$\delta n/\delta y^2$$

FIG. 2b

FIG. 2c

δn/δxy

## Puissance Optique

**FIG. 2d**

## Astigmatisme

**FIG. 2e**

FIG. 3a

$$\delta n/\delta x^2$$

FIG. 3b

$$\delta n/\delta y^2$$

FIG. 3c

$\delta n/\delta xy$

## Puissance Optique

**FIG. 3d**

## Astigmatisme

**FIG. 3e**

$$\delta n/\delta x^2$$

FIG. 4a

$$\delta n/\delta y^2$$

FIG. 4b

δn/δxy

FIG. 4c

## Puissance Optique

**FIG. 4d**

## Astigmatisme

**FIG. 4e**

**EP 1 875 303 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03035377 A
- US 2003003295 A1
- WO 2004034095 A
- EP 1225458 A
- US 6309803 B

**Littérature non-brevet citée dans la description**

- **THIERRY BAUDART.** PAL performance analysis for torical prescription. *Essilor International, «Technical Digest»,* 1996, 190, , SuA3
- *Vision Science and its Applications,* 01 Février 1996